# EUROPÄISCHE PATENTSCHRIFT

(11) **EP 1 405 101 B1**
(45) Veröffentlichungstag und Bekanntmachung des Hinweises auf die Patenterteilung: **10.12.2008**
(21) Anmeldenummer: 02752998.1
(22) Anmeldetag: 09.07.2002
(51) Int. Cl.: G01T 1/02, G01T 3/08, G01T 1/24

(54) **VERFAHREN UND VORRICHTUNG ZUR BESTIMMUNG DER PERSONENDOSIS IN GEMISCHTEN NEUTRONEN-/PHOTONEN-FELDERN**
METHOD AND DEVICE FOR DETERMINING A PERSON'S DOSE IN MIXED NEUTRON/PHOTON FIELDS
PROCEDE ET DISPOSITIF POUR DETERMINER LA DOSE INDIVIDUELLE DANS DES CHAMPS MIXTES DE NEUTRONS ET DE PHOTONS

(30) Priorität: 09.07.2001 DE 10132550
(43) Veröffentlichungstag der Anmeldung: 07.04.2004
(73) Patentinhaber: B.R. Deutschland, vertr.d.d. Bundesministerium f. Wirtschaft u. Arbeit, dieses vertr. d.d. Präs. d. Phys.-Techn. Bundesanstalt, 38023 Braunschweig (DE)
(72) Erfinder: LUSZIK-BHADRA, Marlies, 38116 Braunschweig (DE); WENDT, Wilfried, 38112 Braunschweig (DE)
(74) Vertreter: Lins, Edgar
(86) Internationale Anmeldenummer: PCT/DE2002/002509
(87) Internationale Veröffentlichungsnummer: WO 2003/007018

(56) Entgegenhaltungen:
- DE-A- 3 514 107
- US-A- 5 406 086

## Beschreibung

### 1. Anwendungsgebiet

Die Erfindung betrifft ein Verfahren zur Bestimmung der Personendosis in gemischten Neutronen-/Photonen-Feldern.

Die Erfindung betrifft ferner eine Vorrichtung zur Durchführung des Verfahrens.

### 2. Stand der Technik

Es sind mehrere direkt anzeigende Personendosimeter bekannt, die für Strahlenfelder geeignet sind, die ausschließlich aus Photonen bestehen. Für Strahlenfelder, in denen Neutronen und Photonen gemischt auftreten, sind gegenwärtig allerdings nur zwei Instrumente bekannt. Beide Instrumente liefern insbesondere für die Messung der Personendosis von Neutronenstrahlung nur unbefriedigende Ergebnisse.

Eines dieser beiden Instrumente [1] nutzt für seine Messungen vier Halbleiterzähler. Hierbei variiert jedoch das Ansprechvermögen für die Neutronendosis, das im Energiebereich von einigen keV bis einigen MeV möglichst konstant sein sollte, um mehr als einen Faktor 100.

Das andere der beiden Instrumente [Siemens EPD-nMk2.0; Angaben sind dem Handbuch und der Beschriftung des Instruments selbst entnommen, Veröffentlichungen zum Aufbau sind nicht bekannt] nutzt drei Halbleiterzähler. Der Energiebereich für den Nachweis von Neutronen beschränkt sich hier auf den Bereich thermisch bis intermediär. Dieses Instrument ist damit in wesentlichen Anwendungsbereichen der Personendosimetrie auf Neutronen nicht empfindlich.

Bei den benutzten Auswerteverfahren zur Bestimmung der Neutronendosis ist bekannt, dass die Hoch-Energie-Bereiche des Impulshöhenspektrums ausgewertet werden, die von durch Neutronen erzeugten geladenen Kernen hervorgerufen werden [2]. Dieses Verfahren ist jedoch nicht für die gleichzeitige Auswertung einer Neutronen- und einer Photonendosis geeignet.

Hier setzt die Erfindung an. Es soll ein direkt anzeigendes Personendisposimeter für gemischte Neutronen-/Photonenfelder entwickelt werden, das bei den in relevanten Arbeitsbereichen auftretenden Strahlenfeldern eine richtige Dosisstimmung für beide Strahlenarten getrennt und für die Gesamtdosis ermöglicht. Darüber hinaus wurde ein Verfahren gewählt, das eine möglichst kleine und einfache Bauweise ermöglicht, da komplexere Aufbauten die Störanfälligkeit und den Anschaffungspreis erhöhen.

DE 35 14 107 A1 offenbart ein Verfahren und eine Vorrichtung zum Messen der Dosisleistung gemischter Strahlungsfelder, z.B. aus Neutronen und Photonen, unter Verwendung eines Halbleitersensors. Die Fluktuationen des sich ergebenden Messsignals werden kontinuierlich analysiert und zum Zweck der Anzeige laufend ausgewertet.

US 5, 406,086 A offenbart eine Vorrichtung zur Messung von Strahlendosen mit einer gemeinsamen Diode. Das Messsignal der Diode wird aufgeteilt und mit zwei unterschiedlichen Frequenzfiltern einerseits zur Messung von schweren Partikeln wie Alphateilchen, Protonen und Neutronen, und andererseits zur Messung von leichten Partikeln, wie Elektronen und Photonen, gefiltert. Es werden verschiedene Filter entsprechend der Anstiegzeiten der Impulssignale benutzt.

Bei der Verwendung eines einzigen Halbleiterzählers in der beschriebenen Art ist die Signalanalyse zur Unterscheidung der von Neutronen- und Photonenstrahlung erzeugten Signale relativ aufwändig.

Aufgabe der Erfindung ist es daher, ein vereinfachtes Verfahren und eine vereinfachte Vorrichtung zur Bestimmung der Personendosis in gemischten Neutronen/Photonen-Feldern zu schaffen, wobei nur ein Halbleiterzähler sowohl zur Bestimmung der Neutronen- als auch der Photonendosis benutzt wird.

Die Aufgabe wird erfindungsgemäß mit dem Verfahren mit den Merkmalen des Anspruchs 1 und mit der Vorrichtung mit den Merkmalen des Anspruchs 4 gelöst. Vorteilhofte Ausführungsformen sind in den abhängigen Ansprüchen beschrieben.

### Bevorzugt ist dabei, dass

a) der Halbleiterzähler mit einer empfindlichen Fläche zwischen 0,1 cm² und 30 cm² bei angelegter Spannung zwischen 1 V und 100 V eine empfindliche abgereicherte Schicht mit einer Dicke zwischen 1 µm und 400 µm aufweist sowie eine Totschicht mit einer Dicke zwischen 10nm und 20 µm vor der empfindlichen Schicht,
b) sich vor dem Detektor ein Luftspalt (bis zu 2 cm breit) befindet,
c) vor dem Luftspalt ein erster Konverter angebracht ist, der aus Materialien mit ⁶Li oder ¹⁰B-Gehalt besteht und Dicken von 0,1 µm bis 2,5 cm aufweist,
d) vor dem ersten Konverter ein zweiter Konverter angebracht ist, der aus wasserstoffhaltigem Plastik mit einer Dicke von bis zu 2,5 cm besteht und
e) ein Adsorber, bestehend aus Materialien mit ⁶Li, ¹⁰B oder Cd-Gehalt und einer Dicke von 0,1 mm bis 2 cm, den Halbleiterdetektor, den Luftspalt sowie die Konverter umgibt.

Die erfindungsgemäße Vorrichtung und das entsprechende Verfahren machen sich zunutze, dass Photonen durch den relativ kleinen Energieverlust ihrer Sekundärelektronen vorwiegend Signale im Nieder-Energie-Bereich des Impulshöhenspektrums verursachen.

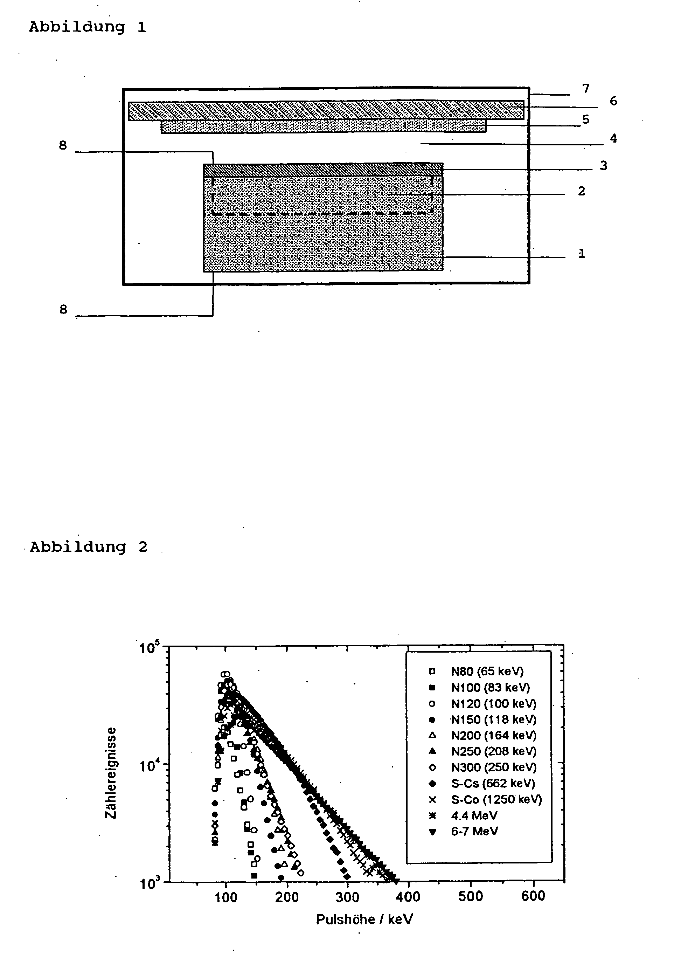

Die Möglichkeit der gleichzeitigen Bestimmung von Neutronen- und Photonendosis ist eine besondere Neuheit und ermöglicht den Bau einfacher, direkt anzeigender Dosimeter. Die Sonde, das Photonenansprechvermögen, die untere Messschwelle und das Verhalten in gemischten Neutronen-/Photonenfeldern werden nachfolgend an einem Beispiel beschrieben und dann verallgemeinert:
Es wurden Untersuchungen mit der in Abb. 1 schematisch dargestellten Detektorsonde durchgeführt, die folgenden Aufbau hat:
   n-Siliziumdetektor (1): 257 µm, 560 Ωcm, 1 cm² effektive Fläche,
   abgereicherte empfindliche Schicht (2): 40 µm Dicke,
   Totschicht (3): 50 nm Dicke,
   Luftspalt (4): 0.4 mm Dicke,
   Konverter 1 (5): ⁶LiF, 3.6 µm Dicke,
   Konverter 2 (6): Polyäthylen, 1 mm Dicke,
   Absorber (7): Polyäthylene + 50% B₄C, 2 mm Dicke,
   Spannung (8) : 9 V.

Die Konverter 1 und 2 (5, 6) sind für den Neutronennachweis optimiert. Sie bestehen im wesentlichen aus Plastik, borhaltiger Plastik und einer dünnen ⁶LiF-Schicht vor dem Silizium-Detektor. Durch eine angelegte Spannung von 9 V wird eine abgereicherte empfindliche Schicht (2) von 40 µm erzeugt. Diese dünne Schicht reduziert die Empfindlichkeit auf Photonenstrahlung so, dass sie bei der Bestimmung der Neutronendosis, für die der Hoch-Energie-Bereich des Impulshöhenspektrums benutzt wird (> 1,5 MeV), nicht stört.

Trotzdem gibt es eine hohe Empfindlichkeit für Photonen im Niedrig-Energie-Bereich des Impulshöhenspektrums. Für den Bau eines möglichst einfachen Dosimeters ist es möglich, die Signale der gleichen Detektorsonde zur Bestimmung der Photonendosis heranzuziehen und in gemischten Neutronen-/Photonen-Feldern den Einfluss der durch Neutronen erzeugten Signale auf die Photonenanzeige zu minimieren.

Dazu wurde die Dosimetersonde auf einem ISO-Wasser-Phantom mit Röntgen-Strahlung der N-Serie, mit ¹³⁷Cs, ⁶⁰Co, 4,4 MeV und 6 bis 7 MeV Gamma-Strahlung bestrahlt [3, 4]. Die Signale des Halbleiterdetektors wurden mit konventioneller nuklearer Elektronik verstärkt und ihr Impulshöhenspektrum aufgenommen. Die Energiekalibrierung wurde mit α-Teilchen einer ²⁴¹Am-Quelle durchgeführt. Die Energieauflösung betrug ca. 30 keV. Die gemessenen Impulshöhenspektren, normiert auf eine Photonen-Personendosis *H*ₚ(10) = 1 mSv sind in Abb. 2 dargestellt. Die Überschneidung der Kurven bei den Niedrig-Energie-Signalen der Impulshöhenspektren zeigt, dass die einfachste Lösung für ein fast konstantes Ansprechvermögen für *H*ₚ(10) eine Integration der Impulse in einem einzigen Intervall um etwa 100 keV ist. Da in diesem Intervall die Intensität bei Bestrahlung mit Photonen besonders hoch ist, wird der Einfluss von Neutronen auf die Photonenanzeige minimiert.

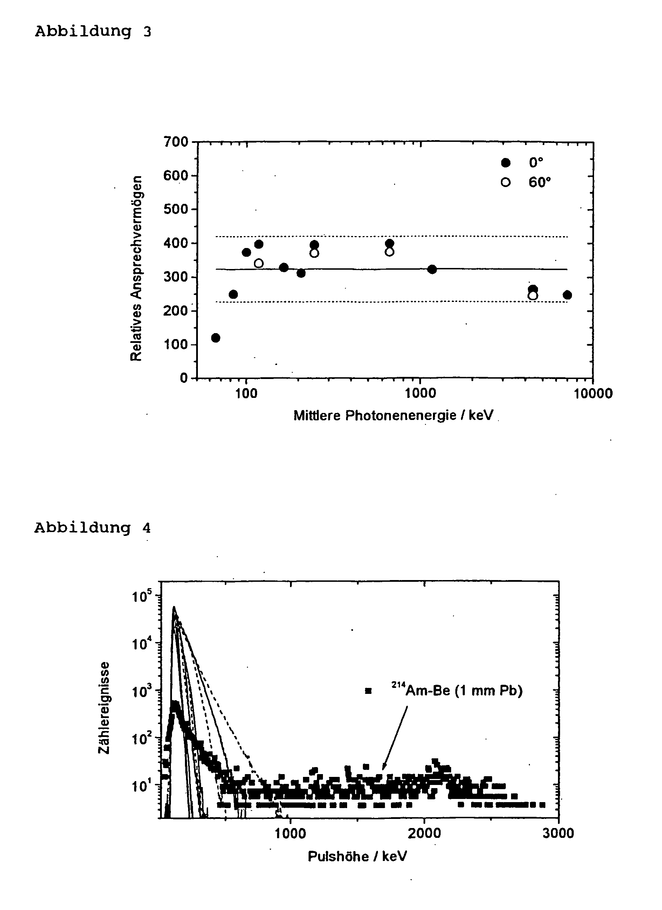

Abb. 3 zeigt das Ansprechvermögen als Funktion der mittleren Photonenenergie unter Benutzung einer Integration von Impulsen im Impulshöhenbereich von 60 keV bis 150 keV. Die Bestrahlungen wurden mit senkrechtem Einfall zur Detektoroberfläche (0°) und - in einigen Fällen - bei 60° zur Detektor-Normalen durchgeführt. Alle Werte weichen für Bestrahlungen mit Photonen im Energiebereich von 80 keV bis 7 MeV um weniger als 30 % (siehe gestrichelte Linien in Abb. 3) vom Mittelwert (323 Impulse pro µSv, siehe durchgezogene Linie in Abb. 3) ab. Der Abfall bei kleinen Photonenenergien (N80, mittlere Energie 65 keV) wird wahrscheinlich durch die elektronische Schwelle verursacht, die bei ungefähr 70 keV gesetzt wurde, um den Untergrund bezüglich des elektronischen Rauschens zu minimieren.

Die untere Nachweisschwelle hängt sowohl vom Rauschen als auch von Untergrundsignalen (verursacht durch die natürliche terrestrische Strahlung) ab. Eine Messung über fünf Tage im Labor ergab eine Photonendosisanzeige von 2,6 µSv. Dieser Wert ist für Anwendungen im Strahlenschutz fast vernachlässigbar, kann aber für genauere Messungen auch subtrahiert werden. Eine untere Nachweisschwelle in der Grö-Benordnung von 1 µSv ist bei einer Messdauer von 8 Stunden leicht erreichbar.

In gemischten Neutronen-/Photonen-Feldern können Neutronen auch im Niedrig-Energie-Bereich des Impulshöhenspektrums Signale produzieren, vorwiegend als Resultat von elastisch gestreuten Neutronen am Silizium [5]. Da exakte Rechnungen für die erfindungsgemäße Vorrichtung nicht vorliegen, wurde der mögliche Einfluss durch Messungen in verschiedenen Neutronen-Kalibrierfeldern untersucht. Abb. 4 zeigt eine Messung, die mit einer ²⁴¹Am-Be-Neutronenquelle (1 mm Pb zur Abschirmung von niederenergetischen Photonen) durchgeführt wurde. Die Messung ist auf eine Neutronen-Personendosis *H*ₚ (10) = 1 mSv normiert.

Der Vergleich mit dem Ansprechvermögen für Photonen zeigt deutlich, dass mögliche Beiträge im Impulshöhenbereich um 100 keV niedriger als einige Prozent sind. Weiterhin sieht die Form der Verteilung im Niedrig-Energie-Impulshöhenbereich ähnlich aus wie das Photonenansprechvermögen. Da in der Regel die Neutronen-Kalibrierfelder geringe Anteile einer Photonendosis aufweisen und der Einfluss auch von dem Neutronenenergiespektrum abhängen kann, wurden Bestrahlungen mit Neutronen unterschiedlicher Quellen, die Neutronen mit Energie zwischen thermisch und 14,8 MeV produzieren, durchgeführt und die Photonendosis, die unter Kenntnis des mittleren Ansprechvermögens aus den Impulshöhensignalen des Halbleiterdetektors bestimmt wird, mit den Ergebnissen eines GM-Zählers verglichen. Die Messungen mit dem GM-Zählrohr wurden frei in Luft durchgeführt und die Messwerte bezüglich Neutronen-Ansprechvermögen des GM-Zählrohrs korrigiert [6, 7].

Da der GM-Zähler im Photonenfeld einer ⁶⁰Co-Quelle kalibriert wurde, aber keine Korrekturen bezüglich Photonen-Energie gemacht wurden, können im Fall der ²⁴¹Am-Be-Quelle, bei der Photonen mit höheren Energien emittiert werden (4,45 MeV), wegen des höheren Ansprechvermögens des GM-Zählers bei diesen Energien bis zu einem Faktor 1,7 zu hohe Werte angezeigt werden.

Die Ergebnisse der relativen Photonen-zu-Neutronendosis sind in Tabelle 1 angegeben. Mit Ausnahme der Messung an der ²⁴¹Am-Be-Quelle sind die relativen Photonen-zu-Neutronen-Dosisverhältnisse, die mit dem Halbleiterzähler bestimmt wurden, leicht höher als die Ergebnisse des GM-Zählers (bis zu 2%). Diese höheren Werte können sowohl durch direkte Quellphotonen als auch durch von Neutronen im Phantom erzeugten Photonen hervorgerufen werden. In allen Fällen ist der Einfluss jedoch klein und akzeptabel.

**Tabelle 1:**

| Vergleich des Verhältnisses von Photonen-zu-Neutronen Äquivalentdosis, gemessen mit dem Halbleiterdosimeter (H_{γ}/Hₙ) _{Mess}. mit Werten gemessen mit dem GM-Zähler (H_{γ}/Hₙ)_{GM} für verschiedene Neutronen-Kalibrierfelder. | | |
|---|---|---|
| Neutronenfeld | (*H*_{γ}/*H*ₙ)_{GM} | (*H*_{γ}/*H*ₙ)_{Mess.} |
| ²⁵²Cf | 0.038 | 0.046 |
| ²⁵²Cf(mod) | 0.13 | 0.151 |
| ²⁴¹Am-Be | 0.034 | 0.015 |
| 14.8 MeV | 0.0012 | 0.0055 |

Für einen zusätzlichen Photonennachweis muss die bereits für ein Neutronendosimeter entwickelte "low power"-Elektronik (Verstärker, ADC, Mikroprozessor) nach bekannten Methoden modifiziert werden, um eine bessere Auflösung im Niedrig-Energie-Impulshöhenbereich zu erreichen.

Es würde anhand eines Beispiels gezeigt, dass unter Benutzung eines einzigen Halbleiterdetektors mit speziellen Konvertern und Absorbern, optimiert für die Bestimmung einer Neutronendosis, und der Impulshöheninformation ein Dosimeter aufgebaut werden kann, mit dem sowohl die Neutronendosis als auch die Photonendosis bestimmt werden kann. Während die Neutronendosis auf der Basis von Signalen, die E-nergiedepositionen oberhalb von 1,5 MeV verursachen, bestimmt wird, werden für die Bestimmung der Photonendosis Impulshöhensignale von 80 keV bis 150 keV benutzt.

Auf diese Weise erhält man ein Ansprechvermögen, das im Photonenenergiebereich von 80 keV bis 7 MeV für Bestrahlungen bei senkrechtem Einfall zur Detektoroberfläche und bei 60° zur Detektornormalen um weniger als 30 % variiert. Die untere Nachweisgrenze liegt in der Größenordnung von 1 µSv. Neutronen tragen in gemischten Neutronen-/Photonen-Feldern zur Photonenanzeige mit weniger als 2 % bei.

Allgemein ist eine Lösung nach dem im Beispiel beschriebenen Prinzip auch möglich, wenn die Parameter des Sondenaufbaus und die Bereiche der Pulhöhenspektrums in gewissen Grenzen variiert werden:

Mögliche Veränderungen des Sondenaufbaus:
Halbleiterdetektor (1) : 0,1 cm² bis 30 cm² Fläche
Abgereicherte Schicht (2) : 1 µm bis 400 µm Dicke
Totschicht (3): 10 nm bis 20 µm Dicke
Luftspalt (4): 0 bis 2 cm
Konverter 1 (5): Materialien mit ⁶Li oder ¹⁰B
Konverter 2 (6): Wasserstoffhaltige Plastik: 0 bis 2,5 cm
Absorber (7) : Materialien mit ⁶Li, ¹⁰B oder Cd, 0,1 mm bis 2 cm Dicke
Spannung (8) : 1 V bis 100 V

Ebenfalls möglich sind dabei folgende Veränderungen der Bereiche des Impuishöhenspektrums:
Photonen: 10 keV bis 2 MeV
Neutronen: > 300 keV

Durch die aufgezeigten möglichen Veränderungen der Sondenparameter sowie die Veränderungen in den Bereichen des Impulshöhenspektrums wird es möglich, die Sonde auch in anderen Strahlenfeldern, z. B. bei Myonen und Elektronen, einzusetzen und dabei andere Messgrößen, z. B. Umgebungsäquivalentdosis, Kerma, biologische Dosis, zu bestimmen.

Alle vorstehend genannten Energien beziehen sich auf eine Energiekalibrierung mit α-Strahlung aus einer ²⁴¹Am-Quelle.

### Bevorzugte Anwendungen

Vorzugsweise wird das erfindungsgemäße Verfahren eingesetzt, um an Arbeitsplätzen, in denen gemischte Strahlung von Photonen und Neutronen auftritt, die Personendosis zu ermitteln. Die geringe Energieabhängigkeit des Geräts, die direkte Anzeige der Dosis und der Einbau von Alarmschwellen führen zu deutlichen Verbesserungen im Strahlenschutz. Mögliche Anwendungsgebiete sind die Messung der Personendosis von Begleitpersonen für Transportbehälter von Brennelementen (z. B. CASTOR), Arbeitern in Kernkraftwerken, Beschäftigten an hochenergetischen Teilchenbeschleunigern, Piloten und Bordpersonal von Flugzeugen.

### Erläuterung der Zeichnungen

Abbildung 1 : Schematischer Aufbau der Dosimeter-Sonde:
1. n-Siliziumdetektor: 257 µm, 560 Ωcm, 1 cm² effektive Fläche
2. Abgereicherte empfindliche Schicht: 40 µm
3. Totschicht: 50 nm
4. Luftspalt: 0,4 mm
5. Konverter 1: ⁶LiF, 3,6 µm
6. Konverter 2: Polyäthylen, 1 mm
7. Absorber: Polyäthylen + 50% B₄C, 2 mm
8. Spannung: 9 V

### Abbildung 2:

Impulshöhenspektren, gemessen für Photonenspektren verschiedener Strahlenqualitäten. Die Strahlenqualitäten sind in der Abbildung angegeben (mittlere Energien in Klammern). Alle Messungen wurden auf *H*ₚ(10) = 1mSv normiert. Die benutzte elektronische Schwelle entspricht einer deponierten Energie von 70 keV (Kalibrierung mit ²⁴¹Am α-Quelle).

### Abbildung 3:

Relatives Ansprechvermögen des Dosimeters auf *H*ₚ (10) für die gleichen Photonen wie in Abbildung 2, angegeben als Funktion der mittleren Photonen-Energie. Die gestrichelten Linien zeigen Abweichungen von 30 % vom Mittelwert (durchgezogene Linie) an.

### Abb. 4:

Impulshöhenspektren, gemessen mit einer ²⁴¹Am-Be-NeutronenQuelle. Zum Vergleich sind die Impulshöhenspektren der Photonenmessungen aus Abbildung 2 hinzugefügt.

### Literatur

1. Aoyama, K., Nagase, Y. Suzuki, T., Watanabe, S., Taniguchi, K., Muramatsu, K. Fujita, M. and Fuji, Y. The Development of New Generation Electronic Personal Dosimeters. Proceedings of IRPA-10, 10th International Congress of the International Radiation Protection Association, CD-ROM, IRPA, Hiroshima (2000).
2. Luszik-Bhadra, M., A Prototype Personal Neutron Dosemeter with one Silicon Diode. Contribution to "European Workshop on Individual Monitoring of External Radiation", 4-6 September 2000, Helsinki, Radiat. Prot. Dosim. (im Druck).
3. Ankerhold, U., Behrens, R., Ambrosi, P. X-ray spectrometry of low energy photons for determining conversion coefficients from air kerma, Ka, to personal dose equivalent, Hp(10), for radiation qualities of the ISO narrow spectrum series. Radiat. Prot. Dosim. 81, 247-258 (1999).
4. Guldbakke, S., Rossiter, M. J., Schäffler, D. and Williams, T. T. The Calibration of Secondary Standard Ionisation Chambers in High Energy Photon Fields. Radiat. Prot. Dosim. 35, 237-240 (1991).
5. Fehrenbacher, G., Biersack, J., Cordes, E. and Wahl, W. Response of Converter Semiconductor Detectors on Neutron Radiation. Radiat. Meas. 28, 429-434, 1997.
6. Kluge, H. Irradiation Facility with Radioactive Reference Neutron Sources: Basic Principles. Report PTB-N-34 (1998).
7. Neumann, S., Guldbakke, S., Matzke, M. and Sosaat, W. Photon Spectrometry in Monoenergetic Neutron Fields. PTB-report (im Druck).

## Patentansprüche

1. Verfahren zur Bestimmung der Personendosis in gemischten Neutronen/Photonen-Feldern, wobei nur ein Halbleiterzähler sowohl zur Bestimmung der Neutronen- als auch der Photonendosis benutzt wird, **dadurch gekennzeichnet, dass** nur die Impulshöheninformation vom Halbleiterzähler für die Ermittlung von Neutronen- und Photonendosis benutzt wird, wobei einerseits die Impulse in einem geeigneten niedrigen ersten Impulshöhenintervall aufsummiert werden und andererseits die Impulse in einem geeigneten, zum ersten Impulshöhenintervall höheren Impulshöhenintervall aufsummiert werden, und die ermittelten Impulssummen des ersten Impulshöhenintervalls zur Bestimmung der Photonendosis und die ermittelten Impulssummen des zweiten Impulshöhenintervalls zur Bestimmung der Neutronendosis durch ein jeweils geeignetes mittleres Ansprechvermögen dividiert werden, und dass eine abgereicherte empfindliche Schicht zur Reduzierung des Einflusses der Photonenstrahlung auf das zweite Impulshöhenintervall angrenzend an eine Totschicht des den Halbleiterzähler bildenden Siliziumdetektors erzeugt wird, wobei die Totschicht an ein Konverterelement angrenzt.

2. Verfahren nach Anspruch 1, **dadurch gekennzeichnet, dass** ein Halbleiterzähler verwendet wird, der mit einer empfindlichen Fläche zwischen 0,1 cm² und 30 cm² bei angelegter Spannung zwischen 1 V und 100 V eine empfindliche abgereicherte Schicht mit einer Dicke zwischen 1 µm und 400 µm sowie eine Totschicht mit einer Dicke zwischen 10 nm und 20 µm vor der empfindlichen Schicht aufweist.

3. Verfahren nach Anspruch 1 oder 2, **dadurch gekennzeichnet, dass** sich vor dem Detektor ein Luftspalt befindet, vor dem Luftspalt ein erster Konverter angebracht ist, der aus Materialien mit ⁶Li oder ¹⁰B-Gehalt besteht und Dicken von 0,1 µm bis 2, 5 cm aufweist, und dass das Konverterelement einen ersten und zweiten Konverter hat und vor dem ersten Konverter ein zweiter Konverter angebracht ist, der aus wasserstoffhaltigem Plastik mit einer Dicke von bis zu 2, 5 cm besteht und ein Absorber, bestehend aus Materialien mit ⁶Li, ¹⁰B oder Cd-Gehalt und einer Dicke von 0,1 mm bis 2 cm, den Halbleiterdetektor, den Luftspalt sowie den ersten und zweiten Konverter umgibt.

4. Vorrichtung zur Bestimmung der Personendosis in gemischten Neutronen- / Photonen-Feldern mit nur einem Halbleiterzähler und einer Auswerteeinrichtung, **dadurch gekennzeichnet, dass** eine abgereicherte empfindliche Schicht (2) zur Reduzierung des Einflusses der Photonenstrahlung auf das zweite Impulshöhenintervall angrenzend an eine Totschicht (3) des den Halbleiterzähler bildenden Siliziumdetektor (1) vorgesehen ist, wobei die Totschicht (3) an einen Konverter (5, 6) angrenzt, und dass eine Recheneinheit für die gleichzeitige Ermittlung von Neutronen- und Photonendosis aus der Impulshöheninformation des Halbleiterzählers durch Aufsummieren einerseits der Impulse in einem geeigneten niedrigen Impulshöhenintervall zur Bestimmung der Photonendosis und andererseits durch Aufsummieren der Impulse in einem geeigneten, zum ersten Impulshöhenintervall höheren Impulshöhenintervall zur Bestimmung der Neutronendosis, und Dividieren der ermittelten Impulssummen zur Bestimmung der Photonendosis und zur Bestimmung der Neutronendosis durch ein jeweils geeignetes mittleres Ansprechvermögen vorgesehen ist.

5. Vorrichtung nach Anspruch 4, **dadurch gekennzeichnet, dass** der Halbleiterzähler mit einer empfindlichen Fläche zwischen 0,1 cm² und 30 cm² bei angelegter Spannung zwischen 1 V und 100 V eine empfindliche abgereicherte Schicht (2) mit einer Dicke zwischen 1 µm und 400 µm aufweist sowie eine Totschicht (3) mit einer Dicke zwischen 10 nm und 20 µm vor der empfindlichen Schicht.

6. Vorrichtung nach Anspruch 4 oder 5, **dadurch gekennzeichnet, dass** sich vor dem Detektor ein bis zu 2 cm breiter Luftspalt (4) befindet, dass vor dem Luftspalt ein erster Konverter (5) angebracht ist, der aus Materialien mit ⁶Li oder ¹⁰B-Gehalt besteht und Dicken von 0,1 µm bis 2, 5 cm aufweist, und dass vor dem ersten (5) Konverter ein zweiter Konverter (6) angebracht ist, der aus wasserstoffhaltigem Plastik mit einer Dicke von bis zu 2, 5 cm besteht und ein Absorber, bestehend aus Materialien mit ⁶Li, ¹⁰B oder Cd-Gehalt und einer Dicke von 0,1 mm bis 2 cm, den Halbleiterdetektor (1), den Luftspalt (4) sowie den ersten und zweiten Konverter (5, 6) umgibt.

## Claims

1. A method for determining the personal dose in combined neutron/photon fields, wherein only a single semiconductor counter is used to determine both the neutron dose and the photon dose **characterized in that**, that the pulse-amplitude information from the semiconductor counter is used to determine the neutron dose and the photon dose, wherein on the one hand the pulses in a suitable low first pulse-amplitude interval are added up, and on the other hand the pulses are added up in a suitable pulse-amplitude interval, which is higher than the first pulse amplitude interval, and wherein for determining the photon dose the determined pulse aggregates of the first pulse-amplitude interval and for determining the neutron dose the determined pulse aggregates of the second pulse-amplitude interval each are divided by a respective average response characteristic, which is in each case suitable, and that a depleted sensitive layer is created adjacent to the dead layer of the silicon detector forming the semiconductor counter for reducing the influence of the photon radiation to the second pulse-amplitude interval, wherein the dead layer abuts on a converter element.

2. Method as claimed in claim 1, **characterized in that** a semiconductor counter is used which, with a sensitive area of between 0.1 cm² and 30 cm² for an applied voltage of between 1 V and 100 V, has a sensitive depleted layer with a thickness of between 1 µm and 400 µm as well as a dead layer with a thickness of between 10 nm and 20 µm in front of the sensitive layer.

3. Method according to claim 1 or 2, **characterized in that** there is an air gap in front of the detector, a first converter which consists of materials with ⁶Li or ¹⁰B content and has thicknesses of from 0.1 µm to 2.5 cm is fitted in front of the air gap, and that the converter element comprising a first and a second converter, and that a second converter which consists of plastic containing hydrogen with a thickness of up to 2.5 cm is fitted in front of the first converter, and an absorber consisting of materials with ⁶Li, ¹⁰B or Cd content and a thickness of from 0.1 mm to 2 cm surrounds the semiconductor detector, the air gap and the first and second converters.

4. A device for determining the personal dose in combined neutron/photon fields comprising only a single semiconductor counter and an evaluation unit **characterized in, that** a depleted sensitive layer (2) is provided adjacent to a dead layer (3) of the silicon detector (1) forming the semiconductor counter for reducing the influence of the photon radiation to the second pulse-amplitude interval, wherein the dead layer (3) abuts on a converter (5, 6), and that a processing unit is provided for simultaneously determining the neutron dose and photon dose from the pulse-amplitude information of the semiconductor counter by adding up the pulses in a suitable low pulse-amplitude interval for determining the photon dose on the one hand and by adding up the pulses in a suitable pulse-amplitude interval, which is higher than the first pulse-amplitude interval, on the other hand for determining the neutron dose, and dividing the determined pulse aggregates for determining the photon dose and for determining the neutron dose by a respective suitable average response characteristic.

5. Device as claimed in claim 4, **characterized in that** the semiconductor counter, with a sensitive area of between 0.1 cm² and 30 cm² for an applied voltage of between 1 V and 100 V, has a sensitive depleted layer (2) with a thickness of between 1 µm and 400 µm as well as a dead layer (3) with a thickness of between 10 nm and 20 µm in front of the sensitive layer.

6. Device as claimed in claim 4 or 5, **characterized in that** there is an air gap (4) up to 2 cm wide in front of the detector, that a first converter (5) which consists of materials with ⁶Li or ¹⁰B content and has thicknesses of from 0.1 µm to 2.5 cm is fitted in front of the air gap, and that a second converter (6) which consists of plastic containing hydrogen with a thickness of up to 2.5 cm is fitted in front of the first converter (5), and an adsorber consisting of materials with ⁶Li, ¹⁰B or Cd content and a thickness of from 0.1 mm to 2 cm surrounds the semiconductor detector (1), the air gap (4) and the first and second converters (5, 6).

## Revendications

1. Procédé pour déterminer la dose individuelle dans des champs mixtes de neutrons et de photons, dans lequel on n'utilise qu'un compteur à semi-conducteur aussi bien pour la détermination de la dose de neutrons que pour celle de la dose de photons, **caractérisé en ce que** le compteur à semi-conducteur utilise seulement l'information de hauteurs d'impulsions pour le calcul de la dose de neutrons et de photons, calcul dans lequel on additionne d'une part les impulsions dans un premier intervalle de hauteurs d'impulsions bas approprié, et on additionne d'autre part les impulsions dans un intervalle de hauteurs d'impulsions approprié, plus élevé que le premier intervalle de hauteurs d'impulsions, et dans lequel on divise par une sensibilité moyenne respective les sommes d'impulsions calculées dans le premier intervalle de hauteurs d'impulsions, pour la détermination de la dose de photons, et les sommes d'impulsions calculées dans le deuxième intervalle de hauteurs d'impulsions, pour la détermination de la dose de neutrons, et **en ce qu'**on fabrique une couche sensible appauvrie pour réduire l'influence du rayonnement de photons sur le deuxième intervalle de hauteurs d'impulsions, adjacente à une couche morte du détecteur au silicium formant le compteur à semi-conducteur, la couche morte étant adjacente à un élément convertisseur.

2. Procédé selon la revendication 1, **caractérisé en ce que** l'on utilise un compteur à semi-conducteur, qui présente, pour une surface sensible comprise entre 0,1 cm² et 30 cm² et une tension appliquée comprise entre 1 V et 100 V, une couche sensible appauvrie d'épaisseur comprise entre 1 µm et 400 µm ainsi qu'une couche morte d'épaisseur comprise entre 10 nm et 20 µm, située devant la couche sensible.

3. Procédé selon la revendication 1 ou 2, **caractérisé en ce qu'**une fente d'air se trouve devant le détecteur, **en ce que** devant la fente d'air est placé un premier convertisseur constitué de matériaux comprenant une teneur en ⁶Li ou en ¹⁰B, et présentant des épaisseurs allant de 0,1 µm à 2,5 cm, **en ce que** l'élément convertisseur a un premier et un deuxième convertisseur, **en ce qu'**un deuxième convertisseur, placé devant le premier convertisseur, est constitué de plastique hydrogéné d'une épaisseur allant jusqu'à 2,5 cm, et **en ce qu'**un absorbeur constitué de matériaux comprenant une teneur en ⁶Li, en ¹⁰B, ou en Cd, d'une épaisseur allant de 0,1 mm à 2 cm, entoure le détecteur à semi-conducteur, la fente d'air, ainsi que les premier et deuxième convertisseurs.

4. Dispositif pour déterminer la dose individuelle dans des champs mixtes de neutrons et de photons, ne comprenant qu'un compteur à semi-conducteur et un dispositif d'évaluation, **caractérisé en ce qu'**il est prévu une couche sensible appauvrie (2) pour réduire l'influence du rayonnement de photons sur le deuxième intervalle de hauteurs d'impulsions, adjacente à une couche morte (3) du détecteur au silicium (1) formant le compteur à semi-conducteur, où la couche morte (3) est adjacente à un convertisseur (5, 6), et **en ce qu'**il est prévu une unité de calcul pour le calcul simultané des doses de neutrons et de photons à partir de l'information de hauteurs d'impulsions du compteur à semi-conducteur, par sommation, d'une part des impulsions dans un intervalle de hauteurs d'impulsions bas approprié, pour la détermination de la dose de photons, d'autre part par sommation des impulsions dans un intervalle de hauteurs d'impulsions approprié plus élevé que le premier intervalle de hauteurs d'impulsions, pour la détermination de la dose de neutrons, et division des sommes d'impulsions calculées pour la détermination de la dose de photons et pour la détermination de la dose de neutrons, par une sensibilité moyenne appropriée pour chaque détermination.

5. Dispositif selon la revendication 4, **caractérisé en ce que** le compteur à semi-conducteur présente, pour une surface sensible comprise entre 0,1 cm² et 30 cm² soumise à une tension comprise entre 1 V et 100 V, une couche sensible appauvrie (2) d'épaisseur comprise entre 1 µm et 400 µm ainsi qu'une couche morte (3) d'épaisseur comprise entre 10 nm et 20 µm, située devant la couche sensible.

6. Dispositif selon la revendication 4 ou 5, **caractérisé en ce qu'**une fente d'air (4) de largeur allant jusqu'à 2 cm se trouve devant le détecteur, **en ce qu'**un premier convertisseur (5) constitué de matériaux comprenant une teneur en ⁶Li ou en ¹⁰B, et présentant des épaisseurs allant de 0,1 µm à 2,5 cm est placé devant la fente d'air, **en ce qu'**un deuxième convertisseur (6) constitué de plastique hydrogéné d'une épaisseur allant jusqu'à 2,5 cm, est placé devant le premier convertisseur (5), et **en ce qu'**un absorbeur constitué de matériaux comprenant une teneur en ⁶Li, en ¹⁰B, ou en Cd, d'une épaisseur allant de 0,1 mm à 2 cm, entoure le détecteur à semi-conducteur (1), la fente d'air (4), ainsi que les premier et deuxième convertisseurs (5, 6).
